(19) Europäisches Patentamt
European Patent Office
Office européen des brevets

(11) Publication number: **0 291 759 B1**

(12) # EUROPEAN PATENT SPECIFICATION

(45) Date of publication of patent specification: **17.07.91**

(51) Int. Cl.5: **C09D 11/10**, C09D 167/00, C08G 63/68

(21) Application number: **88107058.5**

(22) Date of filing: **03.05.88**

(54) **Ink compositions and preparation.**

(30) Priority: **18.05.87 US 50665**

(43) Date of publication of application:
**23.11.88 Bulletin 88/47**

(45) Publication of the grant of the patent:
**17.07.91 Bulletin 91/29**

(84) Designated Contracting States:
**DE FR GB IT**

(56) References cited:
**DE-A- 2 903 022**
**FR-A- 2 311 820**
**US-A- 3 734 874**
**US-A- 4 233 196**

(73) Proprietor: **EASTMAN KODAK COMPANY (a New Jersey corporation)**
**343 State Street**
**Rochester New York 14650(US)**

(72) Inventor: **Clark, Gary Thomas c/o EASTMAN KODAK COMPANY**
**Patent Department 343 State Street**
**Rochester New York 14650(US)**
Inventor: **Rasar, John Nelson c/o EASTMAN KODAK COMPANY**
**Patent Department 343 State Street**
**Rochester New York 14650(US)**
Inventor: **Stockl, Hazel Rebecca Reid EASTMAN KODAK COMPANY**
**Patent Department 343 State Street**
**Rochester New York 14650(US)**

(74) Representative: **Parent, Yves et al**
**Kodak-Pathé Département Brevets et Licences Centre de Recherches et de Technologie Zone Industrielle**
**F-71102 Chalon-sur-Saône Cédex(FR)**

**EP 0 291 759 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention concerns pigmented, aqueous inks and their non or semi-aqueous concentrates containing property modifiers unexpectedly enhancing flow-out, print smoothness, gloss, uniformity, homogeniety, optical density, printability and the like wherein the pigment carrier or binder comprises water dispersible polyester material. The present inks find special utility for letter press, intaglio, gravure, flexographic and other printing processes adaptable to the use of aqueous inks. The term "ink" is used herein in its broad sense as including the use thereof for coatings in all forms such as characters, letters, patterns and coatings with and without designs.

The printing industry, in general, finds many applications for the use of water-based inks and overprint varnishes as a means of meeting increasingly stringent solvent effluent regulations. Present-day water-based inks often fail to satisfy these regulations as well as the necessary printability, stability, and performance properties required for commercial inks. For example, the various ethylene-acrylic acid copolymer salts of U.S. Patent 3,607,813, the disclosure of which is incorporated herein by reference (for the printing process descriptions therein), in addition to requiring complex polymer and ink preparations, lack in performance on certain substrates. Other such aqueous or semi-aqueous systems proposed for printing inks contain polymers such as styrene-butadiene or polyacrylate latex systems but these systems also have serious drawbacks including being nondispersible in their aqueous media after short drying periods which complicates equipment clean up. Other water soluble or dispersible polymers suggested for printing ink use are disclosed in U.S. Patent 4,072,644.

The present invention provides substantial improvements in the preparation, stability, and performance of water-based inks for printing and coating, particularly in regard to flow-out, smoothness, uniformity and optical density on a great variety of substrates.

Description of the Invention

The invention in its broad composition of matter embodiment is defined as a composition useful as a printing ink or useful for the preparation of printing inks comprising a substantially homogeneous system of the components:

(1) from 4 to 80 weight %, preferably (for the press-ready ink) from 10 to 30 weight % of polymeric material of at least one linear water-dissipatable polymer having carbonyloxy linking groups in the linear molecular structure wherein up to 80% of the linking groups may be carbonylamido linking groups, the polymer having an inherent viscosity of from 0.1 to 1.0, preferably from 0.1 to 0.5 measured in a 60/40 parts by weight solution of phenol/tetrachloroethane at 25 °C and at a concentration of 0.25 gram of polymer in 100 ml of the solvent, the polymer containing substantially equimolar proportions of acid equivalents (100 mole percent) to hydroxy and amino equivalents (100 mole percent), the polymer comprising the reaction products of (a), (b), (c), and (d) from the following reactants or ester forming or ester-amide forming derivatives thereof;

(a) at least one difunctional dicarboxylic acid;

(b) from 4 to 25 mole percent, based on a total of all acid, hydroxyl and amino equivalents being equal to 200 mole percent, of at least one difunctional sulfomonomer containing at least one metal cationic group attached to an aromatic or cycloaliphatic nucleus wherein the functional groups are hydroxy, carboxyl or amino;

(c) at least one difunctional reactant selected from a glycol or a mixture of a glycol and diamine having two -NRH groups, the glycol containing two $-CH_2-OH$ groups of which (1) at least 15 mole percent based on the total mole percent of hydroxy or hydroxy and amino equivalents, is a poly(ethylene glycol) having the structural formula

$$H{(OCH_2-CH_2)}_nOH,$$

n being an integer of from 2 to 20, or (2) of which from 0.1 to less than 15 mole percent based on the total mole percent of hydroxy or hydroxy and amino equivalents, is a poly(ethylene glycol) having the structural formula

$$H{(OCH_2-CH_2)}_nOH,$$

n being an integer of between 2 and 500, and with the proviso that the mole percent of said poly(ethylene glycol) within said range is inversely proportional to the quantity of n within said range; and

(d) from none to at least one difunctional reactant selected from a hydroxycarboxylic acid having one $-C(R)_2-OH$ group, an aminocarboxylic acid having one -NRH group, and an amino-alcohol having one $-C(R)_2-OH$ group and one -NRH group, or mixtures of said difunctional reactants;

wherein each R in the (c) or (d) reactants is a H atom or an alkyl group of 1 to 4 carbon atoms;

(2) from 1 to 60 weight % of pigment material;

(3) from 0.01 to 30.0 weight % total of one or more property modifiers selected from the following:

(e) one or a mixture of compounds of the general formula

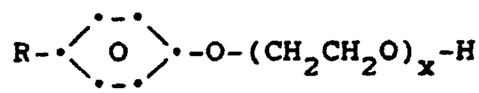

wherein x is 1-50, preferably 3-30, and R is straight or branched alkyl of 1-20 carbons, preferably 6-12 carbons, and most preferably 9 carbons;

(f) one or a mixture of compounds of the general formula

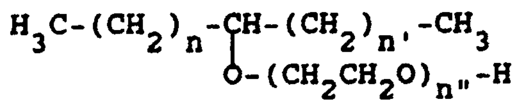

wherein n is 11 to 15, n′ is from 0 to 10 and n″ is from 1 to 50;

(g) one or a mixture of compounds of the general formula

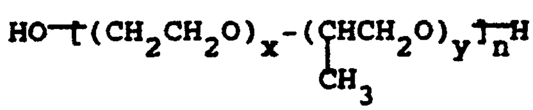

wherein x is from 1 to 50, y is from 1 to 50, and n is from 2 to 25;

(h) one or a mixture of compounds of the formula

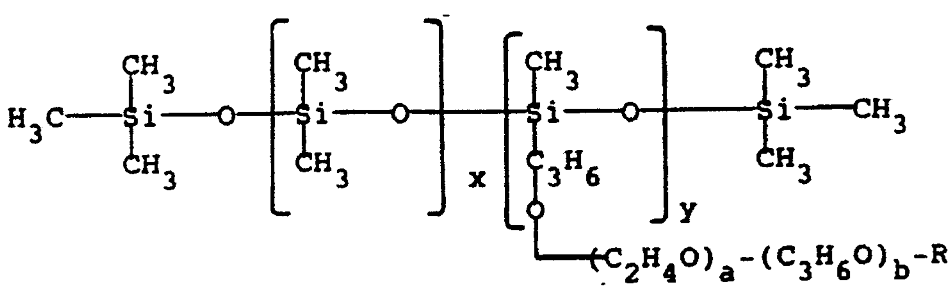

wherein R is hydrogen or alkyl of 1-8 carbons, x is 1 to 50, y is 1 to 50, a is 2 to 30, and b is 2 to 30;

(i) one or a mixture of compounds of the formula

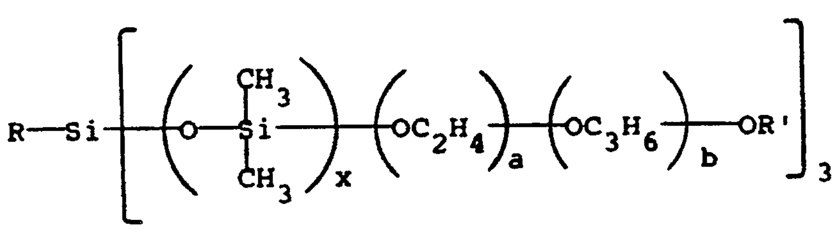

wherein R and R′ are each alkyl of 1-8 carbons, x is 1 to 50, a is 2 to 35, and b is 2 to 35;

(j) one or a mixture of compounds of the formula $R-C{\equiv}C-R^1$ wherein R and $R^1$ are each selected from

straight and branched alkyl of 1-15 carbons wherein at least one of R and $R^1$ carries from 1-3 hydroxyl groups wherein the H of each said hydroxyl group is independently unsubstituted or substituted with a substituent of the formula

$$-(CH_2-CH_2-O)_n-H \quad \text{or} \quad -(CH_2-CH(CH_3)-O)_m-H$$

wherein n and m are each from 1 to 50 and the total of these substituents present is such that the total of n and m is less than 60, wherein each of n and m preferably is from 3 to 35;

(k) one or a mixture of compounds of the formula

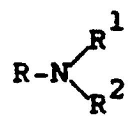

wherein R is straight or branched alkyl of 1 to 20 carbons, one of $R^1$ and $R^2$ may be H, and each of $R^1$ and $R^2$ is further selected from the substituents

$$-(CH_2-CH_2-O)_n-H \quad \text{or} \quad -(CH_2-CH(CH_3)-O)_m-H$$

wherein each of n and m is from 1 to 50, preferably from 3 to 35, and the total of these substituents present is such that the total of n and m is less than 60;

(l) one or a mixture of compounds of the formula

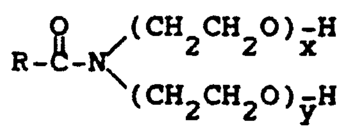

wherein R is straight or branched alkyl of 6-20 carbons, and each of x and y is from 1-50, preferably from 3-30;

(m) one or a mixture of compounds of the formula

$$F(CF_2CF_2)_{3-8}-CH_2CH_2O(CH_2CH_2-O)_xH$$

wherein x is from 1-50, preferably from 3-30;

(n) one or a mixture of compounds of the formula

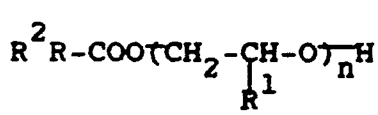

wherein R is straight or branched alkyl of 6-20 carbons, $R^1$ is H or methyl, n is 1-50, preferably 3-30, and $R^2$ is H or hydroxyl; and

(o) one or a mixture of compounds of the formula

$HOCH_2(CH_2OCH_2)_nCH_2OH$

wherein n is from 3 to 300, preferably from about 5 to about 80; and

(4) from none (for full concentrate) to 90 weight %, most preferably for the press-ready inks from 65 to 75 weight % of water.

In the above polymeric material, it is preferred that very minor, e.g., less than 10 mol % based on all reactants, of reactant (d) is employed, that at least about 70 mol % of reactant (c) is glycol, and that at least 70 mol % of all the hydroxy equivalents is present in the glycol.

It is noted that in the above property modifiers in which mixed ether repeating moieties or units are present as shown for example in the formula for (g), these moieties can be positioned randomly in the molecule or can be blocked as depicted by the structural formula, depending on whether the reactant oxides, e.g., ethylene oxide and propylene oxide are simultaneously present in the reaction system, or whether they are fed separately thereto in sequence. Such chemistry is well known to the art and the structural formulas given above are intended to encompass both random and blocked repeating moieties or units.

The viscosities of the inks may, of course, range widely, e.g., from 15 to 60 seconds as measured in a #2 Zahn cup according to ASTM D-4212-82. The higher viscosities, e.g. from 22 to 60 seconds and lower water levels, e.g. from 20 to 55% represent semi-aqueous concentrated forms of the present inks. In this regard, in order to reduce the viscosities of these inks when necessary for certain printing apparatus and processes varying amounts of water are added. In this water addition, the ink viscosity may be reduced up to about 60% of its original concentrate value, and the press-ready ink viscosity preferably ranges between 15 and 30 seconds in a number 2 Zahn cup.

It is preferred that the inherent viscosity of the polymeric material be from 0.28 to 0.38, and that said material be comprised of (a) an acid component (moiety) of from 75 to 84 mole % isophthalic acid and conversely from 25 to 16 mole % 5-sodiosulfoisophthalic acid, and (b) a glycol component (moiety) of from 45 to 60 mole % diethylene glycol and conversely from 55 to 40 mole % 1,4-cyclohexanedimethanol or ethylene glycol or mixtures thereof, and wherein the weight ratio of pigment material to said polymeric material be from 1/10 to 2/1. The term "moiety" as used herein with regard to the polymeric material, designates the residual portion of the reactant acid or glycol which actually enters into or onto the polymer chain during the condensation or polycondensation reaction.

Further preferred embodiments of the invention are as follows:

(1) the said acid component (moiety) of the polymeric material comprises from 80 to 83 mole % isophthalic acid and conversely from about 20 to about 17 mole % 5-sodiosulfoisophthalic acid, and the said glycol component (moiety) comprises from 52 to 56 mole % diethylene glycol and conversely from 48 to 44 mole % 1,4-cyclohexanedimethanol;

(2) the property modifier is selected from one or more compounds of the formula

$$HO{-}[(CH_2CH_2O)_x{-}(\underset{CH_3}{CH}CH_2O)_y]_n{-}H$$

wherein x is from 1 to 50, y is from 1 to 50, and n is from 2 to 25;

(3) the polymeric material comprises from 4 to 30, most preferably from 10 to 25 weight %, the pigment material comprises from 1 to 20, most preferably from 8 to 15 weight %, the water comprises from 55 to 90, most preferably from 65 to 75 weight %, and the total property modifier comprises from 0.05 to 10, most preferably from 0.1 to 7 weight %;

(4) the pigment is one or a mixture of the following color index materials according to their generic names: C.I. Pigment Yellow 17; C.I. Pigment Blue 27; C.I. Pigment Red 49:2; C.I. Pigment Red 81:1; C.I. Pigment Red 81:3; C.I. Pigment Red 81:x; C.I. Pigment Yellow 83; C.I. Pigment Red 57:1; C.I. Pigment Red 49:1; C.I. Pigment Violet 23; C.I. Pigment Green 7; C.I. Pigment Blue 61; C.I. Pigment Red 48:1; C.I. Pigment Red 52:1; C.I. Pigment Violet 1; C.I. Pigment White 6; C.I. Pigment Blue 15; C.I. Pigment Yellow 12; C.I. Pigment Blue 56; C.I. Pigment Orange 5; C.I. Pigment Black 7; C.I. Pigment Yellow 14; C.I. Pigment Red 48:2; and C.I. Pigment Blue 15:3;

(5) the aqueous ink is coated or printed onto a substrate selected from metal foil, newsprint, bleached and unbleached Kraft paper, clay coated paper, glass, calendered paper, stainless paper, paper board, and films or other substrates of polyester, polycarbonate, cellulose ester, regenerated cellulose, poly-(vinylidene chloride), polyamide, polyolefin, or polystyrene;

(6) the method for preparing the ink comprises the steps of:

(a) dispersing said polymeric material in deionized water;

(b) adding said property modifer to the dispersion of (a) with agitation to obtain a substantially homogeneous mixture;

(c) adding said pigment to the mixture of (b) with agitation to form a predispersion blend; and

(d) grinding the blend of (c) to reduce the pigment particle size to less than about 6.0 on the NPIRI scale; and

(7) said coating or print comprises any of the above ink compositions wherein a substantial portion of the initial metal cations of the water solubilizing sulfonate groups of the polymeric material has been replaced with an insolubilizing polyvalent metal cation, such as $Al^{+3}$, $Ca^{++}$, or the like as disclosed and in the manner described in U.S. Patent 4,145,469, the disclosure of which is incorporated herein by reference. As stated therein, generally, based on the weight of the polymeric material, 0.05% to about 2.0% by weight of the polyvalent metal cation are required for effective insolubilization; and

(8) the weight ratio of water to total modifier in the press-ready ink is from 10 to 180.

The complete chemical definitions of the above C.I. pigments are given in the following table:

## Pigments

| Generic Name | C.A. Index/Chemical Name |
|---|---|
| C.I. Pigment Yellow 17 | Butanamide, 2,2'-[(3,3'-dichloro[1,1'-biphenyl]-4,4'-diyl)bis(azo)bis[N-(2-methoxyphenyl)-3-oxo- |
| C.I. Pigment Blue 27 | Ferrate (4-1), hexakis (cyano-C)-ammonium iron (3+)(1:1:1) |
| C.I. Pigment Red 49:2 | 1-Naphthalenesulfonic acid, 2-[(2-hydroxy-1-naphthalenyl)azo]-, calcium salt (2:1) |
| C.I. Pigment Red 81:1 | Benzoic acid, 2,-[6-ethyl-amino)-3-(ethylimino)-2,7-dimethyl-3H-xanthen-9-yl]-, ethyl ester, w/molybdenum tungsten hydroxide oxide phosphate |
| C.I. Pigment Red 81:3 | Benzoic acid, 2-[6-ethyl-amino)-3-ethylimino)-2,7-dimethyl-3H-xanthen-9-yl]-, ethyl ester, molybdate-silicate |
| C.I. Pigment Red 81:x | Benzoic acid, 2-[6-(ethyl-amino)-3-(ethylimino)-2,7-dimethyl-3H-xanthen-9-yl]-ethyl ester, molybdate-phosphate |
| C.I. Pigment Yellow 83 | Butanamide, 2,2'-[(3,3'-dichloro[1,1'-biphenyl]-4,4'-diyl)bis(azo)bis[N-(4-chloro-2,5-dimethoxy-phenyl)-3-oxo- |
| C.I. Pigment Red 57:1 | 2-Naphthalenecarboxylic acid, 3-hydroxy-4-[(4-methyl-2-sulfophenyl)azo]-, calcium salt (1:1) |
| C.I. Pigment Red 49:1 | 1-Naphthalenesulfonic acid, 2-[(2-hydroxy-1-naphthalenyl)azo]-, barium salt (2:1) |

| | |
|---|---|
| C.I. Pigment Violet 23 | Diindolo[3,3',2'm] triphenodioxazine, 8,18-dichloro-5,15-diethyl-5,15-dihydro- |
| C.I. Pigment Green 7 | C.I. Pigment Green 7 |
| C.I. Pigment Blue 61 | Benzenesulfonic acid, [[4-[[4-phenylamino)phenyl]-[4-(phenylimino)-2,5-cyclohexadien-1-ylidene]methyl]-phenyl]amino]- |
| C.I. Pigment Red 48:1 | 2-Naphthalenecarboxylic acid, 4-[(5-chloro-4-methyl-2-sulfophenyl)azo]-3-hydroxy-, barium salt (1:1) |
| C.I. Pigment Red 52:1 | 2-Naphthalenecarboxylic acid, 4-[(4-chloro-5-methyl-2-sulfophenyl)azo]-3-hydroxy-, calcium salt (1:1) |
| C.I. Pigment Violet 1 | Ethanaminium, N-[9-(2-carboxyphenyl)-6-(diethyl-amino)-3H-xanthen-3-ylidene]-N-ethyl-, molybdatetungstatephosphate |
| C.I. Pigment White 6 | Titanium oxide ($TiO_2$) |
| C.I. Pigment Blue 15 | Copper, [29H, 31H-phthalocyaninato (2-)-$N^{29}$, $N^{30}$, $N^{31}$, $N^{32}$]-, (Sp-4-1)- |
| C.I. Pigment Yellow 12 | Butanamide, 2,2'-[(3,3'-dichloro[1,1'-biphenyl]-4,4'-diyl)bis(azo)]bis[3-oxo-N-phenyl- |
| C.I. Pigment Blue 56 | Benzenesulfonic acid, 2-methyl-4-[[4-[[4-[(3-methylphenyl)amino]phenyl]-[4-[(3-methylphenyl)-imino]-2,5-cyclohexa-dien-1-ylidene]methyl]-phenyl]amino]- |

| | |
|---|---|
| C.I. Pigment Orange 5 | 2-Naphthalenol, 1-[(2,4-dinitrophenyl)azo]- |
| C.I. Pigment Black 7 | Carbon black |
| C.I. Pigment Yellow 14 | Butanamide, 2,2'-[(3,3'-dichloro[1,1'-biphenyl]-4,4'-diyl)bis(azo)]bis-[N-(2-methylphenyl)-3-oxo- |
| C.I. Pigment Red 48:2 | 2-Naphthalenecarboxylic acid, 4-[(5-chloro-4-methyl-2-sulfophenyl)-azo]-3-hydroxy-, calcium salt (1:1) |
| C.I. Pigment Blue 15:3 | Copper, [29H, 31H-phthalocyaninato (2-)-$N^{29}$, $N^{30}$, $N^{31}$, $N^{32}$]-, (SP-4-1)- |

The pigments useful in the present invention, in addition to those specifically identified above, include those described in NPIRI Raw Materials Data, Vol. 4, Pigments, Copyright 1983.

The inherent viscosities (I.V.) of the particular polyester materials useful herein range from 0.1 to 1.0 determined according to ASTM D2857-70 procedure, in a Wagner Viscometer of Lab Glass, Inc. of Vineland, New Jersey, having a 1/2 ml. capillary bulb, using a polymer concentration about 0.25% by weight in 60/40 by weight of phenol/tetrachloroethane. The procedure is carried out by heating the polymer/solvent system at 120°C for 15 minutes, cooling the solution to 25°C and measuring the time of flow at 25°C. The I.V. is calculated from the equation

$$(n)_{\substack{25°C.\\0.50\%}} = \frac{\ln \frac{t_s}{t_o}}{C}$$

where:

| | |
|---|---|
| (n) | = inherent viscosity at 25°C at a polymer concentration of 0.25 g/100 ml. of solvent; |
| ln | = natural logarithm; |
| $t_s$ | = sample flow time; |
| $t_o$ | = solvent-blank flow time; and |
| C | = concentration of polymer in grams per 100 ml. of solvent = 0.25. |

The units of the inherent viscosity throughout this application are in deciliters/gram. It is noted that higher concentrations of polymer, e.g., 0.50 g of polymer/100 ml solvent may be employed for more precise I.V. determinations.

In general, the water dissipatable polyester materials useful in the present invention are excellent film formers for water-based printing inks. The polymers form stable dispersions in water and produce tough, flexible films on drying, wherein the films will form at temperatures down to just above the freezing point of water. The polymers in dispersion form may be plasticized if necessary, for example, with certain water immiscible phthalate esters to high degrees of flexibility. Printing inks prepared from the aqueous dispersed polymers are readily further water reducible. The inks dry rapidly upon printing, wet surfaces exceptionally well and have excellent adhesion to many plastic films and metal foil as well as to paper, polyolefin, glass and many other substrates. Both the 100% solid, water-dissipatable polymers and the corresponding aqueous dispersions thereof may be pigmented by conventional techniques, and the property modifier may be added prior to or during blending of the pigment with the 100% solid polymer or its aqueous dispersion, and pigment or the modifier may be added to the pre-formed aqueous polymer-pigment dispersion by

suitable mixing. It is preferred to add the property modifier to the aqueous polymer dispersion prior to pigment addition and grinding as marked improvement in color development, smoothness and gloss in the print are effected. The prints have moderate water resistance upon heating and may be post-treated to produce films with excellent resistance to water, for example, with an aqueous alum solution or the like cation. In this regard, the use of deionized water in the present inks is preferred in order to prevent premature ion exchange on the sulfonate groups. Conventional biocides, defoamers and the like may be used in conventional manner.

The aforedescribed polyester material is prepared according to the polyester preparation technology described in U.S. Patents: 3,734,874; 3,779,993; and 4,233,196, the disclosures of which are incorporated herein by reference, and the use of the term "acid" in the above description and in the appended claims includes the various ester forming or condensable derivatives of the acid reactants such as the dimethyl esters thereof as employed in the preparations set out in these patents. Among the preferred sulfo-monomers are those wherein the sulfonate group is attached to an aromatic nucleus such as benzene, naphthalene, diphenyl, or the like, or wherein the nucleus is cycloaliphatic such as in 1,4-cyclohexanedicarboxylic acid.

Dispersal of the present polyester material in water is preferably done at preheated water temperature of a 180° to 200°F and the polymer added slowly as pellets to the vortex under high shear stirring. A Cowles Dissolver, Waring Blender, or similar equipment may be used. Once water is heated to temperature, additional heat input is not required. Depending upon the volume prepared, dispersal of the pellets by stirring should be complete within 15 to 30 minutes. Continued agitation with cooling may be desirable to prevent thickening at the surface due to water evaporation. Viscosities of the dispersions remain low up to nonvolatile levels of 25-30%, but generally increase sharply above these levels. Viscosities of the dispersions will be influenced by the degree of polymer dispersion (fineness) obtained which is affected by the dispersing temperature, shear, and time. A typical non-volatile content for the aqueous dispersions for most applications is from 28 to 38% for the preferred polyester material.

The present concentrates and inks may also be prepared by milling, e.g., two-roll milling the finely comminuted, nonpolymer soluble pigment and modifier into the solid polyester material and thereafter dispersing the milled material in water in a manner generally similar to the procedure described in U.S. Patent 4,148,779 for solubilizing organic disperse textile dyes in polyester for subsequent dispersal in water. Dispersions can also be made by adding the pigment at high speed agitation to the polyester material previously dispersed in water and then grinding in a ball mill or sand mill to further reduce pigment size. The presence of the modifier in this operation is preferred. The preferred pH of the present inks is from 5.0 to 7.5.

The following examples will further illustrate practice of the invention.

Polyester Preparation

Example 1

A mixture of 79.5 g (0.41 mole) of dimethyl isophthalate, 26.6 g (0.09 mole) of dimethyl-5-sodiosulfoisophthalate, 54.1 g (0.51 mole) of diethylene glycol, 37.4 g (0.26 mole) of 1,4-cyclohexanedimethanol, 1.4 ml of a 1.0% by weight (based on Ti) catalyst solution of titanium tetraisopropoxide, and 0.74 g (0.009 mole) of sodium acetate buffer is stirred and heated for two hours at 200-220°C. The temperature is then raised to 275°C and a vacuum of 0.3 mm is applied. Heating and stirring is continued for 1 hour under these conditions. After cooling, the polymer obtained has an I.V. of 0.36 and is tough and rubbery and is dissipatable in hot water to the extent of about 25 weight percent to give a clear, slightly viscous solution. The composition of the acid moieties of this polyester material is analyzed to be 82 mole % isophthalic acid residue and 18 mole % 5-sodiosulfoisophthalic acid residue, and of the glycol moieties is analyzed to be 54 mole % diethylene glycol and 46 mol % 1,4-cyclohexanedimethanol.

In accordance with the present invention, inks prepared from the above polyester material and including the property modifier and polymer insoluble pigments have been found to be unexpectedly superior over prior aqueous inks in one or more of such properties as flow-out or printability, pigment wetting, pigment stability, temperature stability (heat and freeze-thaw), non-settling for extended periods of time, non-polluting with respect to odor and volatile organics, nonflocculating, wide viscosity range inks, adhesion to a variety of substrates, hardness, gloss, drying rate on substrates, resistance to grease, water and scuff, compatability with other water-based inks, wet rub resistance, ink mileage characteristics (considerable water dilution allowable at the press), ink press stability in general, printability (clean, sharp transfer without "stringing or misting"), trapping, easy clean up, nonplugging of printing plates, flexibility, redispersibility or

rewetting, crinkle resistance, high pigment loading, solvent resistance, alkali, chemical and detergent resistance, blocking resistance, lightfastness, toughness, substrate wetting, hold-out, opacity, dryrate, and no offset on the printing press (coating, e.g. on tension rollers).

The following Example 2 is a typical preparation of a control ink against which the inks of the present invention may be compared in performance:

Ink Preparation

Example 2

| Control Ink (No Modifier) | Weight % |
|---|---|
| Deionized Water | 60.8 |
| Polymer of Example 1 | 24.0 |
| Carbon Black, Pigment C.I. 7 | 15.0 |
| Biocide, Tektamer 38 AD (1,2-dibromo-2,4-dicyanobutane) | 0.2 |

The solid polymer (32 parts) is dispersed in approximately 68 parts of deionized water at 85 °C to 95 °C and 0.2 parts of biocide added. To 75 parts of this dispersion is added 10 parts of deionized water and 15 parts of the carbon black at high speed agitation for five minutes on a Waring Blender. The mixture is then milled in an Eiger mill operated at about 5,000 rpm for about 7.5 minutes to further reduce the pigment for a grind of less than "2" and approaching "0" NPIRI grind gauge. The resulting composition has a pH of about 5.6 and a viscosity of 26-29 seconds on a #2 Zahn cup determined according to ASTM D-4212-82. This ink is reduced to press-ready viscosity of about 22 seconds (#2 Zahn cup) by adding about 5 parts of deionized water thereto.

In the following examples a hand proofer is employed which provides reasonable facsimiles of prints obtained by the flexographic printing processes as discussed in the aforesaid U.S. Patent 3,607,813 and is typically used to prepare roll-outs or proofs for laboratory testing on a wide variety of substrates. The wire-wound rod is typically used to prepare draw-downs of inks on a variety of substrates. These rods apply a uniform wet-film thickness to the substrate, and after drying, the drawdowns are ready for testing. Typically 2.5-8 number wire wound draw-down rods are employed. For exemplary details of such proofer equipment and use, see the publication "Gardco 1983-1984 Handbook of Paint Testing, Corrosion Control and Laboratory Instruments" of the Paul N. Gardner Company, Inc., 281 D Commercial Blvd., Suite 205 Lauderdale by the Sea, Florida 33308-4491, a copy of which accompanies this application.

Example 3

A control ink is prepared as described in Example 2, having the following composition:

| Ingredient | Weight % |
|---|---|
| Polymer of Example 1 | 20 |
| Carbon Black, Pigment C.I. 7 | 15 |
| Deionized Water | 65 |

Proofs of this ink were prepared with a flexographic handproofer employing a 180-line anilox roll and with a Geiger Gravure proof press using a 150-line engraved cylinder. This ink has poor printability, optical density, uniformity and homogeneity when printed on 30 pound newsprint stock.

Example 4

When small amounts of the water in the control ink of Example 3 is replaced with the property modifiers in the amounts shown below, smoother and darker proofs showing vast improvement in the above properties, particularly uniformity are obtained on 30-pound newsprint stock versus the control.

**Modifier**

1.6% Silwet L-7607 - (from Union Carbide) polyalkylene oxide of dimethyl poly siloxane, formula (h) above.

3.2% Silwet L-7607

5.0% Emulphogene DA-630 - (from General Aniline & Film) ethoxylated decyl alcohol, formula (f) above,

5.0% Emulphogene BC-610 - (from General Aniline & Film) ethoxylated tridecyl alcohol, formula (f) above.

5.0% Pluronic L61 - (from BASF) copolymer of propylene and ethylene oxide according to formula (g) above.

Example 5

| Ingredient | Weight % in Press-Ready Ink |
|---|---|
| Polymer of Example 1 | 10 |
| Carbon Black, Pigment C.I. 7 | 20 |
| Foamaster V (antifoam) | 1 |
| Water | 69 |

A draw down of the above control ink made with a 2.5 wire wound rod on coated and uncoated paper (Penopac stock) does not produce a smooth, continuous film on the coated portion of the stock. The addition, however, in accordance with the present invention, of 3 wt. % (based on total ink weight) of Surfynol 440, an ethoxylated acetylenic glycol of formula (j) above, by stirring into the above ink gives smooth, continuous, uniform, homogeneous film on the coated portion of the Penopac stock.

Example 6

A control ink is prepared as described in Example 2, having the following composition:

| Ingredient | Weight % |
|---|---|
| Polymer of Example 1 | 20 |
| Carbon Black, Pigment C.I. 7 | 14 |
| Reflex Blue R-51 (C.I. Pigment Blue 61) | 1 |
| Foamaster V (antifoam) | 1 |
| Water | 64 |

Proofs of this ink were prepared with a flexographic handproofer employing a 180-line anilox roll and with a Geiger Gravure proof press using a 150-line engraved cylinder. This ink has poor printability, optical density, uniformity and homogeneity when printed on 30 pound newsprint stock.

When 5% of the water in the above ink is replaced in accordance with the present invention, with Pluronic L61, a copolymer of ethylene oxide and propylene oxide of formula 3(g) above, a smoother and darker draw down is obtained with a hand proofer on 30 lb. newsprint stock or other paper stocks versus that obtained by the control ink. Also, the ink containing the Pluronic L61 followed the roller of the hand proofer whereas the control ink did not.

Example 7

Polyesters designated (A), (B), (C) and (D) were prepared essentially in accordance with Example 1 of the aforementioned U.S. Patent 4,233,196 from the following materials:

| (A) | g. moles |
|---|---|
| Dimethyl Isophthalate (IPA) | 0.415 |
| Dimethyl-5-Sodiosulfoisophthalate (SIP) | 0.085 |
| 1,4-Cyclohexanedimethanol (CHDM) | 0.520 |
| Carbowax 1000 (CW 1000) | 0.0273 |
| Sodium Acetate | 0.0085 |
| Irganox 1010 | 0.1 wt. % |

The Carbowax 1000 has the structure

$$H(OCH_2-CH_2)_nOH$$

wherein n is about 22. The polymer analyzed by NMR contains (in reacted form) about 83 mole % IPA, about 17 mole % SIP, about 94.5 mole % CHDM, and about 5.5 mole % of CW 1000, and has an I.V. of about 0.39.

| (B) | g. moles |
|---|---|
| Dimethyl Isophthalate | 0.328 |
| Dimethyl-5-Sodiosulfoisophthalate | 0.072 |
| 1,4-Cyclohexanedimethanol | 0.442 |
| Carbowax 400 (n=10) | 0.058 |
| Sodium Acetate | 0.0072 |

The polymer as analyzed by NMR contains (in reacted form) about 82 mole % IPA, about 18 mole % SIP, about 85.5 mole % CHDM and about 14.5 mole % CW 400, and has an I.V. of about 0.46.

| (C) | g. moles |
|---|---|
| Dimethyl Isophthalate | 0.41 |
| Dimethyl-5-Sodiosulfoisophthalate | 0.09 |
| 1,4-Cyclohexanedimethanol | 0.55 |
| Carbowax 4000 (n=90) | 0.0005 |
| Sodium Acetate | 0.009 |

The polymer as analyzed by NMR contains (in reacted form) about 82 mole % IPA, about 18 mole % SIP, about 99.9 mole % CHDM and about 0.1 mole % CW 4000, and has an I.V. of about 0.16.

| (D) | g. moles |
|---|---|
| Dimethyl Isophthalate | 0.205 |
| Dimethyl-5-Sodiosulfoisophthalate | 0.045 |
| Ethylene Glycol (EG) | 0.9638 |
| Carbowax 2000 (n=45) | 0.03625 |
| Sodium Acetate | 0.0045 |

The polymer as analyzed by NMR contains (in reacted form) about 82 mole % IPA, about 18 mole % SIP, about 85.5 mole % EG, and about 14.5 mole % CW 2000, and has an I.V. of about 0.34.

In these polymers containing the Carbowax material, the n value is preferably between 6 and 150.

Inks prepared from these polymers as in Example 4, using the same modifiers and proportions, show similar printing improvements for a variety of end uses.

Example 8

Several additional inks were made as described above, each comprising 19.2 wt. % of the polymer of Example 1, 12.0 wt. % carbon black, and each of Pluronic L-61 and Silwet L-7607 (separately) in concentrations of 1.0, 3.0, 5.0, 10.0, 15.0, and 20.0 % by wt., the remainder being deionized water. These inks were coated onto aluminum foil, Mylar, polyethylene (corona discharge treated), newspaper, regular bond paper, PENOPAC, and Kraft paper as above. These experiments show that optical density and homogeniety of the coating is greatly improved on porous stock as the concentration of either the Pluronic L-61 or Silwet L-7607 (separately) increases from about 0.5 wt. % to 20.0 wt. % or more, particularly at concentrations above about 5.0 wt. %.

Example 9

A further ink was prepared comprising 15.3 wt. % of the polymer of Example 1, 11.9 wt. % Red C.I. 49:2, 5.0 wt. % Pluronic L-61, and the remainder being water. This ink was coated as above onto aluminum foil, polyethylene (corona discharge tested), Mylar and coated paper. These experiments show that the Pluronic L-61 in general improves optical density, gloss and homogeniety of coating.

Example 10

Further inks were made comprising 19.2 wt. % of the polymer of Example 1, 12.0 wt. % carbon black, Emulphogene DA-630 in concentrations of 0.05, 0.1, 0.2, 0.3, 0.5, and 1.0 wt. %, and the remainder being water. These inks were coated onto the same substrates as in Example 9. These experiments show that most noticeably, the gloss and homogeniety improves on aluminum foil, the gloss improves on Mylar, the printability improves on the polyethylene, and the optical density and homogeniety improves on the porous substrates.

The invention has been described in detail with particular reference to preferred embodiments thereof, but it will be understood that variations and modifications can be effected within the spirit and scope of the invention.

## Claims

**1.** A composition useful as or in the preparation of inks comprising a substantially homogeneous system of the components:

(1) from 4 to 80% weight % of polymeric material of at least one linear, waterdissipatable polymer having carbonyloxy linking groups in the linear molecular structure wherein up to 80% of the linking groups may be carbonylamido linking groups, the polymer having an inherent viscosity of from 0.1 to 1.0 measured in a 60/40 parts by weight solution of phenol/tetrachloroethane at 25° C and at a concentration of 0.25 gram of polymer in 100 ml of the solvent, the polymer containing equimolar proportions of acid equivalents (100 mole percent) to hydroxy and amino equivalents (100 mole percent), the polymer comprising the reaction products of (a), (b), (c) and (d) from the following reactants or ester forming or esteramide forming derivatives thereof;

(a) at least one difunctional dicarboxylic acid;

(b) from 4 to 25 mole percent, based on a total of all acid, hydroxyl and amino equivalents being equal to 200 mole percent, of at least one difunctional sulfomonomer containing at least one cationic sulfonate group attached to an aromatic or cycloaliphatic nucleus wherein the functional groups are hydroxy, carboxyl or amino;

(c) at least one difunctional reactant selected from a glycol or a mixture of a glycol and diamine having two -NRH groups, the glycol containing two $-CH_2-OH$ groups of which

(1) at least 15 mole percent based on the total mole percent of hydroxy or hydroxy and amino equivalents, is a poly(ethylene glycol) having the structural formula

$$H{\leftarrow}OCH_2{-}CH_2{\rightarrow}_nOH,$$

n being an integer of from 2 to 20, or

(2) of which from 0.1 to less than 15 mole percent based on the total mole percent of hydroxy or hydroxy and amino equivalents, is a poly(ethylene glycol) having the structural formula

$$H{\leftarrow}OCH_2{-}CH_2{\rightarrow}_nOH,$$

n being an integer of between 2 and 500, and with the proviso that the mole percent of said poly(ethylene glycol) within said range is inversely proportional to the quantity of n within said range; and

(d) from none to at least one difunctional reactant selected from a hydroxycarboxylic acid having one $-C(R)_2-OH$ group, an aminocarboxylic acid having one -NRH group, and an amino-alcohol having one $-C(R)_2-OH$ group and one -NRH group, or mixtures of said difunctional reactants;

wherein each R in the (c) or (d) reactants is a H atom or an alkyl group of 1 to 4 carbon atoms;

(2) from 1.0 to 60.0 weight % of pigment material;

(3) from 0.01 to 30 weight % total of one or more property modifiers selected from the following:

(e) one or a mixture of compounds of the general formula

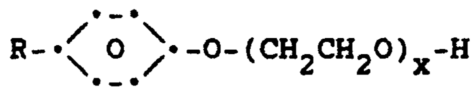

wherein x is 1-50 and R is straight or branched alkyl of 1-20 carbons;
(f) one or a mixture of compounds of the general formula

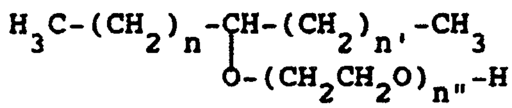

wherein n is 11 to 15, n′ is from 0 to 10 and n″ is from 1 to 50;
(g) one or a mixture of compounds of the general formula

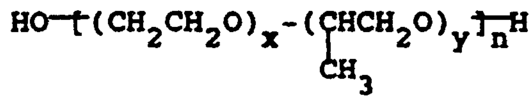

wherein x is from 1 to 50, y is from 1 to 50, and n is from 2 to 25;
(h) one or a mixture of compounds of the formula

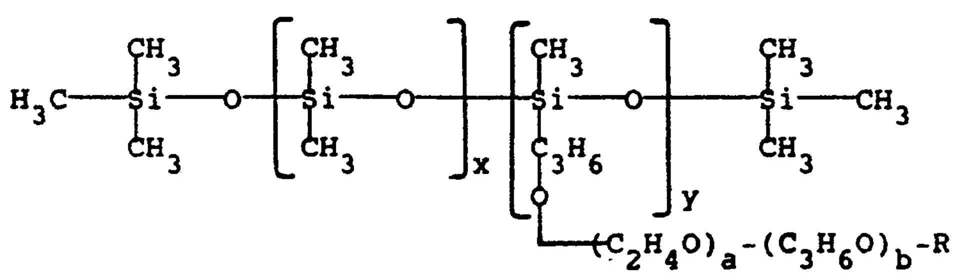

wherein R is hydrogen or alkyl of 1-8 carbons, x is 1 to 50, y is 1 to 50, a is 2 to 30, and b is 2 to 30;
(i) one or a mixture of compounds of the formula

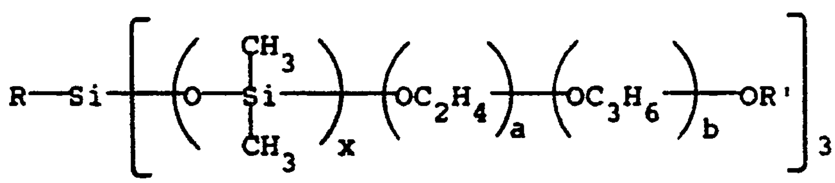

wherein R and R′ are each alkyl of 1-8 carbons, x is 1 to 50, a is 2 to 35, and b is 2 to 35;
(j) one or a mixture of compounds of the formula R-C≡C-$R^1$ wherein R and $R^1$ are each selected from straight and branched alkyl of 1-15 carbons wherein at least one of R and $R^1$ carries from 1-3 hydroxyl groups wherein the H of each said hydroxyl group is independently unsubstituted or substituted with a substituent of the formula

$$-(CH_2-CH_2-O)_n-H \quad \text{or} \quad -(CH_2-CH(CH_3)-O)_m-H$$

wherein n and m are each from 1 to 50 and the total of these substituents present is such that the

total of n and m is less than 60;
(k) one or a mixture of compounds of the formula

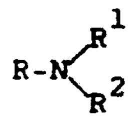

wherein R is straight or branched alkyl of 1 to 20 carbons, one of $R^1$ and $R^2$ may be H, and each of $R^1$ and $R^2$ is further selected from the substituents

$$-(CH_2-CH_2-O)_n-H \text{ or } -(CH_2-CH(CH_3)-O)_m-H$$

wherein each of m and n is from 1 to 50 and the total of these substituents present is such that the total of m and n is less than about 60;
(l) one or a mixture of compounds of the formula

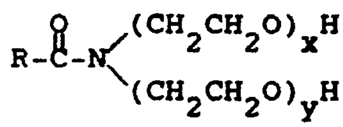

wherein R is straight or branched alkyl of 6-20 carbons, and each of x and y is from 1-50;
(m) one or a mixture of compounds of the formula

$$F(CF_2CF_2)_{3-8}CH_2CH_2O(CH_2CH_2-O)_xH$$

wherein x is from 1-50;
(n) one or a mixture of compounds of the formula

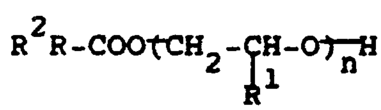

wherein R is straight or branched alkyl of 6-20 carbons, $R^1$ is H or methyl, n is 1-50 and $R^2$ is H or hydroxyl; and
(o) one or a mixture of compounds of the formula

$$HOCH_2(CH_2OCH_2)_nCH_2OH$$

wherein n is from 3 to 100; and
(4) from none to 90 weight % of water.

**2.** The composition of claim 1 wherein the n value of reactant (c) of the formula

$$H(OCH_2-CH_2)_nOH$$

is between 2 and 20.

3. The composition of claim 2 wherein the polymeric material comprises one or more polyester materials having an inherent viscosity of from 0.28 to 0.38, an acid moiety of from about 75 to about 84 mole % isophthalic acid and conversely from 25 to 16 mole % 5-sodiosulfoisophthalic acid, and a glycol moiety of from 45 to 60 mole % diethylene glycol and conversely from 55 to 44 mole % 1,4-cyclohexanedimethanol or ethylene glycol or mixtures thereof, and the pigment material is present in a weight ratio with respect to total polyester materials of from 1/10 to 2/1 blended with said polyester materials.

4. The composition of claim 3 wherein said acid moiety comprises from 80 to 83 mole % isophthalic acid and conversely from 20 to 17 mole % 5-sodiosulfoisophthalic acid, and said glycol moiety comprises from 52 to 56 mole % diethylene glycol and conversely from 48 to 44 mole % 1,4-cyclohexanedimethanol.

5. The composition of claim 1 wherein the property modifier comprises from 0.5 to 10.0% by weight of total composition weight and has the formula

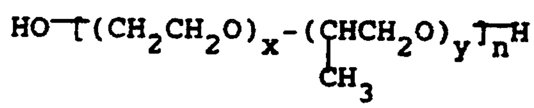

wherein x is from 1 to 50, y is from 1 to 50, and n is from 2 to 25;

6. The composition of any one of claims 1-5 wherein the pigment is one or a mixture of the following color index materials: C.I. Pigment Yellow 17; C.I. Pigment Blue 27; C.I. Pigment Red 49:2; C.I. Pigment Red 81:1; C.I. Pigment Red 81:3; C.I. Pigment Red 81:x; C.I. Pigment Yellow 83; C.I. Pigment Red 57:1; C.I. Pigment Red 49:1; C.I. Pigment Violet 23; C.I. Pigment Green 7; C.I. Pigment Blue 61; C.I. Pigment Red 48:1; C.I. Pigment Red 52:1, C.I. Pigment Violet 1; C.I. Pigment White 6; C.I. Pigment Blue 15; C.I. Pigment Yellow 12; C.I. Pigment Blue 56; C.I. Pigment Orange 5; C.I. Pigment Black 7; C.I. Pigment Yellow 14; C.I. Pigment Red 48:2; and C.I. Pigment Blue 15:3.

7. The composition of claim 6 wherein the polymeric material comprises from 4 to 30 weight %, the pigment material comprises from 1 to 20 weight %, the water comprises from 55 to 90 weight %, and the total property modifier comprises from 0.05 to 10.0 weight %.

8. The composition of claim 6 wherein the polymeric material comprises from 10 to 25 weight %, the pigment material comprises from 8 to 15 weight %, the water comprises from 65 to 75 weight %, and the total property modifier comprises from 0.1 to 7 weight %.

9. The composition of claim 6 coated onto a substrate selected from metal foil, newsprint, bleached and unbleached Kraft paper, clay coated paper, glass, calendered paper, stainless paper, paper board, and films or other substrates of polyester, polycarbonate, polyolefin, cellulose ester, regenerated cellulose, poly(vinylidiene chloride), polyamide, polyolefin, or polystyrene.

10. A water-insoluble coating or print on a substrate according to claim 9 wherein substantially all water has evaporated and a substantial portion of the initial metal cations of the water solubilizing sulfonate groups of the polymeric material has been replaced with an insolubilizing cation.

11. The composition of claim 6 wherein the weight ratio of water to total modifier is from 10 to 180.

12. The composition of claim 1 wherein the property modifier is one or a mixture of compounds of the general formula

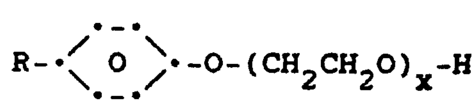

wherein x is 3-30 and R is straight or branched alkyl of 6-12 carbons.

**13.** The composition of claim 12 wherein x is 3-30, and R is 9 carbons.

**14.** The composition of claim 1 wherein the property modifier is one or a mixture of compounds of the general formula

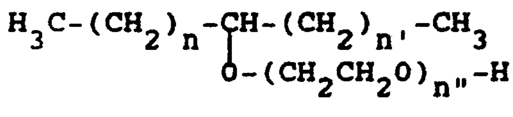

wherein n is 11 to 15, n′ is from 0 to 10 and n″ is from 1 to 50.

**15.** The composition of claim 1 wherein the property modifier is one or a mixture of compounds of the formula

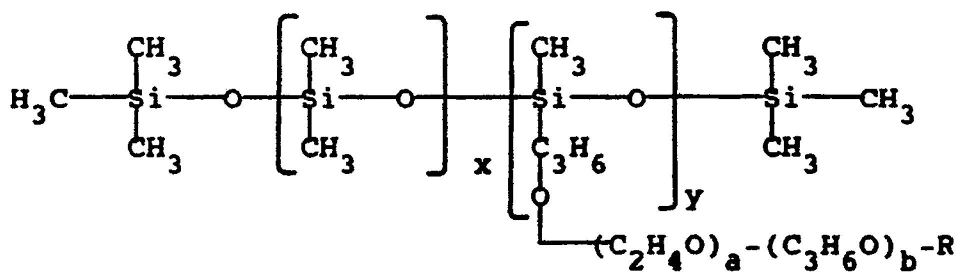

wherein R is hydrogen or alkyl of 1-8 carbons, x is 1 to 50, y is 1 to 50, a is 2 to 30, and b is 2 to 30.

**16.** The composition of claim 1 wherein the property modifier is one or a mixture of compounds of the formula

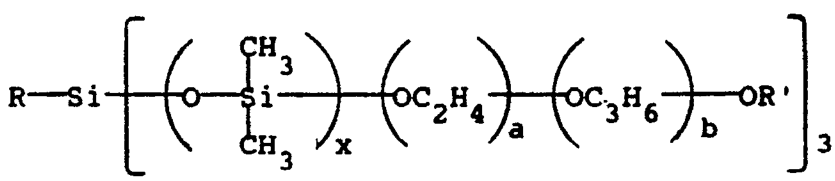

wherein R and R′ are each alkyl of 1-8 carbons, x is 1 to 50, a is 2 to 35, and b is 2 to 35.

**17.** The composition of claim 1 wherein the property modifier is one or a mixture of compounds of the formula R-C≡C-$R^1$ wherein R and $R^1$ are each selected from straight and branched alkyl of 1-15 carbons wherein at least one of R and $R^1$ carries from 1-3 hydroxyl groups wherein the H of each said hydroxyl group is independently unsubstituted or substituted with a substituent of the formula

$$-(CH_2-CH_2-O)_n-H \quad \text{or} \quad -(CH_2-CH(CH_3)-O)_m-H$$

wherein n and m are each from 1 to 50 and the total of these substituents present is such that the total of n and m is less than 60.

**18.** The composition of claim 17 wherein each of n and m is from 3 to 35.

**19.** The composition of claim 1 wherein the property modifier is one or a mixture of compounds of the

formula

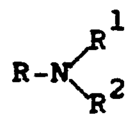

wherein R is straight or branched alkyl of 1 to 20 carbons, one of $R^1$ and $R^2$ may be H, and each of $R^1$ and $R^2$ is further selected from the substituents

$$-(CH_2-CH_2-O)_n-H \text{ or } -(CH_2-CH(CH_3)-O)_m-H$$

wherein each of m and n is from 1 to 50 and the total of these substituents present is such that the total of m and n is less than 60.

**20.** The composition of claim 19 wherein each of n and m is from 3 to 35.

**21.** The composition of claim 1 wherein the property modifier is one or a mixture of compounds of the formula

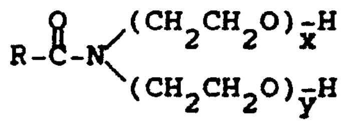

wherein R is straight or branched alkyl of 6-20 carbons, and each of x and y is from 1-50;

**22.** The composition of claim 21 wherein each of x and y is from 3 to 30.

**23.** The composition of claim 1 wherein the modifier is one or a mixture of compounds of the formula

$$F(CF_2CF_2)_{3-8}CH_2CH_2O-(CH_2CH_2-O)_x-H$$

wherein x is from 1-50.

**24.** The composition of claim 23 wherein x is from 3 to 30.

**25.** The composition of claim 1 wherein the modifier is one or a mixture of compounds of the formula

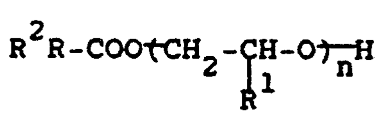

wherein R is straight or branched alkyl of 6-20 carbons, $R^1$ is H or methyl, n is 1-50 and $R^2$ is H or hydroxyl.

**26.** The composition of claim 25 wherein n is from 3 to 30.

**27.** The composition of claim 1 wherein the modifier is one or a mixture of compounds of the formula

$HOCH_2(CH_2OCH_2)_nCH_2OH$

wherein n is from 3 to 300.

**28.** The composition of claim 27 wherein n is from 5 to 80.

**29.** The method for preparing the composition of claim 1 comprising the steps of:
(a) dispersing said polymeric material in deionized water;
(b) adding said property modifier to the dispersion of (a) with agitation to obtain a substantially homogeneous mixture;
(c) adding said pigment to the mixture of (b) with agitation to form a pre-dispersion blend; and
(d) grinding the blend of (c) to reduce the pigment particle size to less than 6.0 on the NPIRI scale.

**Revendications**

**1.** Composition utile comme encre ou pour la préparation d'encres comprenant un système pratiquement homogène des composants suivants :
(1) de 4 à 80 % en poids d'une substance polymère constituée d'au moins un polymère linéaire dispersible dans l'eau ayant des groupes de liaison carbonyloxy dans sa structure moléculaire linéaire dans lequel jusqu'à 80 % des groupes de liaison peuvent être des groupes de liaison carbonylamido, polymère ayant une viscosité inhérente comprise entre 0,1 et 1,0 mesurée dans une solution comprenant 60 parts en poids de phénol pour 40 parts en poids de tétrachloroéthane à 25 °C et à une concentration de 0,25 g de polymère pour 100 ml de solvant, polymère contenant des proportions équimolaires de motifs acides (100 moles pour cent) et de motifs hydroxy et amino (100 moles pour cent), polymère comprenant les produits de réaction des réactifs (a), (b), (c) et (d) suivants, ou de dérivés amides ou estéramides de ces réactifs ;
(a) au moins un acide dicarboxylique difonctionnel ;
(b) de 4 à 25 pour cent en moles par rapport au total des motifs acide, hydroxyle et amino égal à 200 moles pour cent, d'au moins un sulfomonomère difonctionnel contenant au moins un groupe sulfonate cationique rattaché à un noyau aromatique ou cycloaliphatique où les groupes fonctionnels sont des groupes hydroxy, carboxyle ou amino ;
(c) au moins un réactif difonctionnel choisi parmi un glycol ou un mélange d'un glycol et d'une diamine ayant deux groupes -NRH, le glycol contenant deux groupes $-CH_2OH$ et tels que,
(1) au moins 15 % en moles par rapport au total des motifs hydroxy ou hydroxy et amino est un polyéthylène glycol ayant la formule

$H{+}OCH_2\text{-}CH_2{+}_nOH$,

où n est un entier compris entre 2 et 20, ou
(2) au moins de 0,1 à moins de 15 moles pour cent par rapport au total du pourcentage en moles des motifs hydroxy ou hydroxy et amino, est un polyéthylène glycol ayant la formule

$H{+}OCH_2\text{-}CH_2{+}_nOH$,

n étant un entier compris entre 2 et 500 et avec la condition supplémentaire que le pourcentage en moles de ce polyéthylène glycol soit inversement proportionnel à n ; et
(d) de zéro à au moins un réactif difonctionnel choisi parmi un acide hydroxycarboxylique ayant un groupe $-C(R)_2-OH$, un acide aminocarboxylique ayant un groupe -NRH, et un amino-alcool ayant un groupe $-C(R)_2-OH$ et un groupe -NRH, ou des mélanges desdits réactifs difonctionnels ;
où chaque R dans les réactifs (c) ou (d) est un atome d'hydrogène ou un groupe alkyle de 1 à 4 atomes de carbone ;
(2) de 1,0 % à 60,0 % en poids de pigment ;
(3) de 0,01 % à 30 % en poids total d'un ou deux agents modifiant les propriétés choisis parmi :
(e) un ou un mélange de composés de formule générale

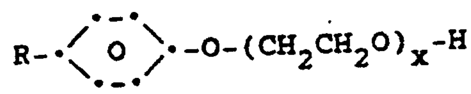

où x est compris entre 1 et 50 et R est un groupe alkyle droit ou ramifié de 1 à 20 atomes de carbone ;
(f) un ou un mélange de composés de formule générale

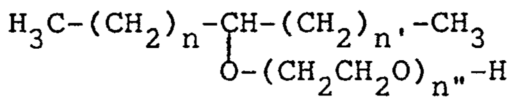

où n est compris entre 11 et 15, n' entre 0 et 10 et n" entre 1 et 50 ;
(g) un ou un mélange de composés de formule générale

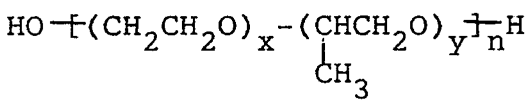

où x est compris entre 1 et 50, y entre 1 et 50 et n entre 2 et 25 ;
(h) un ou un mélange de composés de formule

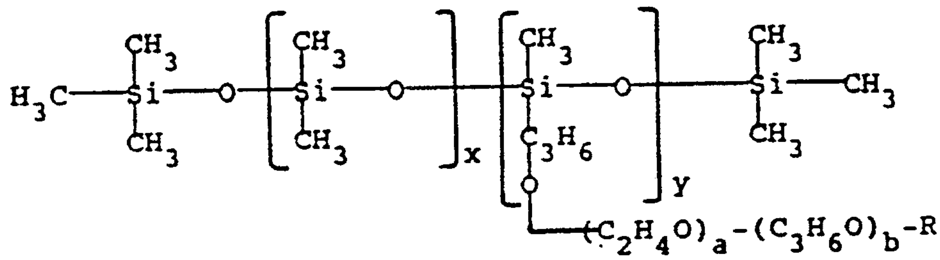

où R est un atome d'hydrogène, ou un groupe alkyle de 1 à 8 atomes de carbone, x est compris entre 1 et 50, y entre 1 et 50, a entre 2 et 30 et b entre 2 et 30 ;
(i) un ou un mélange de composés de formule

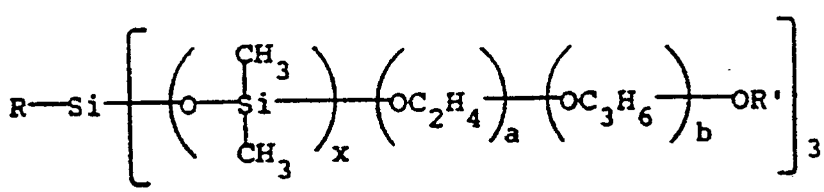

où R et R' sont chacun un groupe alkyle de 1 à 8 atomes de carbone, x est compris entre 1 et 50, a entre 2 et 35 et b entre 2 et 35 ;
(j) un ou un mélange de composés de formule $R-C \equiv C-R^1$ où R et $R^1$ sont chacun choisis parmi des groupes alkyles droits ou ramifiés de 1 à 15 atomes de carbone, où au moins un des R et $R^1$ porte de 1 à 3 groupes hydroxyle, où le H de chaque groupe hydroxyle peut être remplacé par un substituant de formule

$\{CH_2-CH_2-O\}_nH$ ou $\{CH_2-CH(CH_3)-O\}_mH$

où n et m sont chacun compris entre 1 et 50 et le total des substituants présents est tel que le

total de n et m est inférieur à 60 ;
(k) un ou un mélange de composés de formule

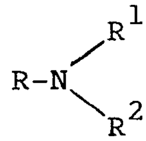

où R est un groupe alkyle droit ou ramifié de 1 à 20 atomes de carbone, chaque $R^1$ et $R^2$ peut être H, chaque $R^1$ et $R^2$ peut être substitué par $(CH_2\text{-}CH_2\text{-}O)_nH$ ou $[CH_2\text{-}CH(CH_3)\text{-}O]_mH$ où chaque m et n est compris entre 1 et 50 et le total des substituants est tel que le total de m et n est inférieur à 60 ;
(l) un ou un mélange de composés de formule

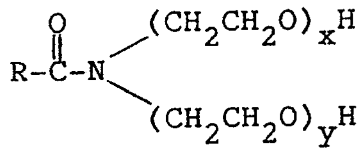

où R est un groupe alkyle droit ou ramifié de 6 à 20 atomes de carbone, et chaque x et y est compris entre 1 et 50 ;
(m) un ou un mélange de composés de formule

$$F(CF_2CF_2)_{3-8}CH_2CH_2O(CH_2CH_2\text{-}O)_xH$$

où x est entre 1 et 50 ;
(n) un ou un mélange de composés de formule

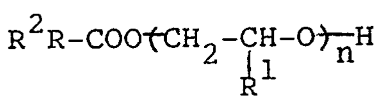

où R est un groupe alkyle droit ou ramifié de 6 à 20 atomes de carbone, $R^1$ est H ou méthyle, n est compris entre 1 et 50 et $R^2$ est H ou hydroxyle ; et
(o) un ou un mélange de composés de formule

$HOCH_2(CH_2OCH_2)_nCH_2OH$

où n est compris entre 3 et 100 ; et
(4) de zéro à 90 % en poids d'eau.

2. Composition selon la revendication 1 dans laquelle dans le réactif (c) de formule

$$H(OCH_2\text{-}CH_2)_nOH$$

n est compris entre 2 et 20.

3. Composition selon la revendication 2, dans laquelle la substance polymère comprend un ou plusieurs polyesters ayant une viscosité comprise entre 0,28 et 0,38, où la portion acide comprend de 75 à 84 %

en moles d'acide isophtalique et inversement de 25 à 16 % en moles d'acide 5-sodiosulfoisophtalique, et la portion glycol comprend de 45 à 60 % en moles de diéthylène glycol et inversement de 55 à 44 % en moles de 1,4-cyclohexanediméthanol ou d'éthylène glycol ou des mélanges de ces derniers, et le pigment est présent à raison d'un rapport en moles de 1/10 à 2/1 par rapport au poids total de polyester, et est mélangé à ce polyester.

**4.** Composition selon la revendication 3, dans laquelle la position acide comprend de 80 à 83 moles % d'acide isophtalique et inversement de 20 à 17 % en moles d'acide 5-sodiosulfoisophtalique et la portion glycol comprend de 52 à 56 % en moles de diéthylène glycol et inversement de 48 à 44 % en moles de 1,4-cyclohexanediméthanol.

**5.** Composition selon la revendication 1, dans laquelle l'agent modifiant les propriétés constitue de 0,5 à 10 % en poids par rapport au poids total de la composition et a la formule

$$HO-\left[(CH_2CH_2O)_x-(\underset{CH_3}{\underset{|}{C}}HCH_2O)_y\right]_n H$$

où x est compris entre 1 et 50, y entre 1 et 50 et n entre 2 et 25.

**6.** Composition selon l'une quelconque des revendications 1 à 5 dans laquelle le pigment est un ou un mélange des substances colorantes suivantes : C.I. Pigment jaune 17; C.I. Pigment bleu 27; C.I. Pigment rouge 49:2; C.I. Pigment rouge 81:1; C.I. Pigment rouge 81:3; C.I. Pigment rouge 81:x; C.I. pigment jaune 83; C.I. Pigment rouge 57:1; C.I. Pigment rouge 49:1; C.I. Pigment violet 23; C.I. Pigment vert 7; C.I. Pigment bleu 61; C.I. Pigment rouge 48:1; C.I. Pigment rouge 52:1; C.I. Pigment violet 1; C.I. Pigment blanc 6; C.I. Pigment bleu 15; C.I. Pigment jaune 12; C.I. Pigment bleu 56; C.I. Pigment orange 5; C.I. Pigment noir 7; C.I. Pigment jaune 14; C.I. Pigment rouge 48:2: et C.I. Pigment bleu 15:3.

**7.** Composition selon la revendication 6, dans laquelle la substance polymère constitue 4 à 30 % en poids, le pigment 1 à 20 % en poids, l'eau 55 à 90 % en poids, et le total d'agents modifiant les propriétés 0,05 à 10 % en poids.

**8.** Composition selon la revendication 6, dans laquelle la substance polymère constitue 10 à 25 % en poids, le pigment 8 à 15 % en poids, l'eau 65 à 75 % en poids et le total d'agents modifiant les propriétés 0,1 à 7 % en poids.

**9.** Composition selon la revendication 6, appliquée sur un substrat choisi parmi une feuille métallique, du papier journal, du papier kraft blanchi ou non, du papier au kaolin, du verre, du papier satiné, du papier immaculé, du papier épais (paperboard), et des films ou autres substrats de polyester, polycarbonate, polyoléfine, ester de cellulose, cellulose régénérée, polychlorure de vinylidiène, polyamide, polyoléfine ou polystyrène.

**10.** Impression ou couche appliquée sur un substrat insoluble dans l'eau selon la revendication 9, dans laquelle pratiquement toute l'eau est évaporée et une proportion importante des cations métalliques et des groupes sulfonates solubilisants dans l'eau présents initialement, a été remplacée par un cation insolubilisant.

**11.** Composition selon la revendication 6, dans laquelle le rapport en poids de l'eau au total d'agents modifiant les propriétés est compris entre 10 et 180.

**12.** Composition selon la revendication 1, dans laquelle l'agent modifiant les propriétés a la formule

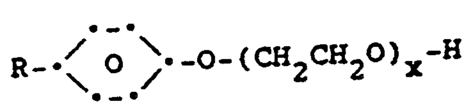

où x est compris entre 3 et 30 et R est un groupe alkyle droit ou ramifié de 6 à 12 atomes de carbone.

**13.** Composition selon la revendication 12, où x est compris entre 3 et 30 et R comprend 9 atomes de carbone.

**14.** Composition selon la revendication 1, dans laquelle l'agent modifiant les propriétés est l'un des composés ou un mélange de composés de formule

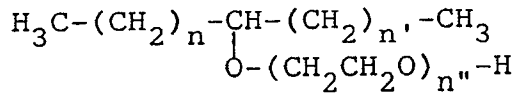

où n est compris entre 11 et 15, n' entre 0 et 10 et n" entre 1 et 50.

**15.** Composition selon la revendication 1, dans laquelle l'agent modifiant les propriétés est l'un des composés ou un mélange de composés de formule

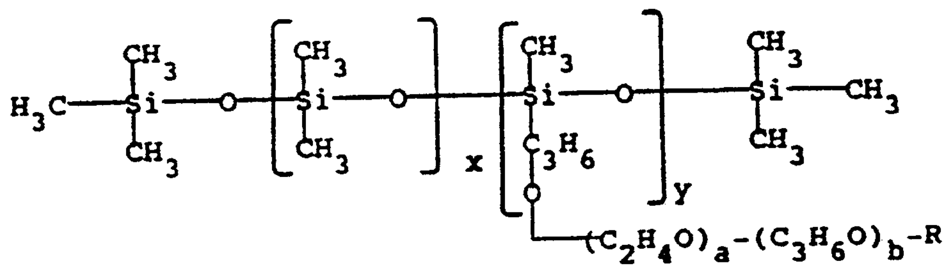

où R est H ou un groupe alkyle de 1 à 8 atomes de carbone, x est compris entre 1 et 50, y entre 1 et 50, a entre 2 et 30, et b entre 2 et 30.

**16.** Composition selon la revendication 1, dans laquelle l'agent modifiant les propriétés est l'un des composés ou un mélange de composés de formule

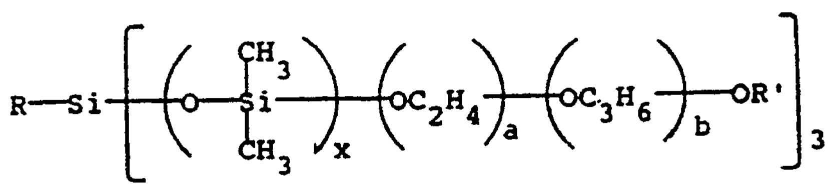

où R et R' sont chacun un groupe alkyle de 1 à 8 atomes de carbone, x est compris entre 1 et 50, a entre 2 et 35 et b entre 2 et 25.

**17.** Composition selon la revendication 1, dans laquelle l'agent modifiant les propriétés est l'un des composés ou un mélange de composés de formule $R-C \equiv C-R^1$ où R et $R^1$ chacun séparément sont choisis parmi les groupes alkyle droits ou ramifiés de 1 à 15 atomes de carbone où au moins l'un des groupes R et $R^1$ porte de 1 à 3 groupes hydroxyle, où H peut être remplacé par un substituant de formule

$\{CH_2-CH_2-O\}_n H$ ou $\{CH_2-CH(CH_3)-O\}_m H$

où n et m sont chacun compris entre 1 et 50 et le total des substituants présents est tel que le total de m et n est inférieur à 60.

**18.** Composition selon la revendication 17 dans laquelle chaque n et m est compris entre 3 et 35.

**19.** Composition selon la revendication 1 dans laquelle l'agent modifiant les propriétés est l'un des composés ou un mélange des composés de formule

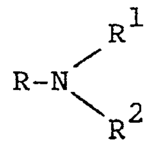

où R est un groupe alkyle droit ou ramifié de 1 à 20 atomes de carbone, un des $R^1$ et $R^2$ peut être H, chaque $R^1$ et $R^2$ est choisi parmi les substituants

$-(CH_2-CH_2-O)_n H$ ou $-[CH_2-CH(CH_3)-O]_m H$

où chaque m et n est compris entre 1 et 50 et le total des substituants présents est tel que le total de m et n est inférieur à 60.

**20.** Composition selon la revendication 19, dans laquelle chaque n et m est compris entre 3 et 35.

**21.** Composition selon la revendication 1, dans laquelle l'agent modifiant les propriétés est l'un des composés ou un mélange des composés de formule

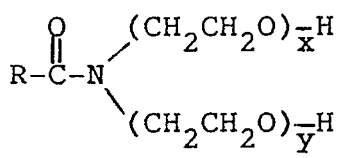

où R est un groupe alkyle droit ou ramifié de 6 à 20 atomes de carbone, et chaque x et y est compris entre 1 et 50.

**22.** Composition selon la revendication 21, dans laquelle chaque x et y est compris entre 3 et 30.

**23.** Composition selon la revendication 1, dans laquelle l'agent modifiant les propriétés est l'un des composés ou un mélange de composés de formule

$$F(CF_2CF_2)_{3-8}CH_2CH_2O(CH_2CH_2-O)_xH$$

où x est compris entre 1 et 50.

**24.** Composition selon la revendication 23 où x est compris entre 3 et 30.

**25.** Composition selon la revendication 1, dans laquelle l'agent modifiant les propriétés est l'un des composés ou un mélange de composés de formule

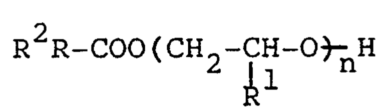

où R est un groupe alkyle droit ou ramifié de 6 à 20 atomes de carbone, $R^1$ est H ou méthyle, n est compris entre 1 et 50 et $R^2$ est H ou hydroxyle.

**26.** Composition selon la revendication 25, dans laquelle n est compris entre 3 et 30.

**27.** Composition selon la revendication 1, dans laquelle l'agent modifiant les propriétés est l'un des composés ou un mélange de composés de formule

$HOCH_2(CH_2OCH_2)_nCH_2OH$

où n est compris entre 3 et 300.

**28.** Composition selon la revendication 27, où n est compris entre 5 et 80.

**29.** Procédé de préparation de la composition selon la revendication 1, comprenant les étapes suivantes:
(a) on disperse la substance polymère dans de l'eau déionisée ;
(b) on ajoute l'agent modifiant les propriétés à la dispersion de (a) sous agitation pour obtenir un mélange pratiquement homogène ;
(c) on ajoute le pigment au mélange (b) sous agitation pour former un mélange prédispersé ; et
(d) on broie le mélange obtenu en (c) pour réduire la taille du pigment à moins de 6,0 sur l'échelle NPIRI.

## Patentansprüche

**1.** Zusammensetzung, die als Farbe oder zur Herstellung von Farben geeignet ist, aus einem praktisch homogenen System der Komponenten:
(1) von 4 bis 80 Gew.-% polymerem Material aus mindestens einem linearen, in Wasser verteilbaren Polymeren mit Carbonyloxy-Bindegruppen in der linearen Molekülstruktur, in der bis zu 80 % der Bindegruppen Carbonylamido-Bindegruppen sein können, wobei das Polymer eine Inherent-Viskosität von 0,1 bis 1,0, gemessen in einer Lösung von Phenol/Tetrachloroethan eines Gewichtsverhältnisses von 60/40 bei 25 °C und bei einer Konzentration des Polymeren von 0,25 g in 100 ml des Lösungsmittels aufweist, und wobei das Polymer equimolare Anteile von Säureequivalenten (100 Mol-%) zu Hydroxy- und Aminoequivalenten (100 Mol-%) aufweist, und das Polymer aus den Reaktionsprodukten von (a), (b), (c) und (d) der folgenden Reaktionskomponenten oder Esterbildenden oder Esteramid-bildenden Derivaten hiervon gebildet ist:
(a) mindestens eine difunktionelle Dicarbonsäure;
(b) 4 bis 25 Mol-%, bezogen auf sämtliche Säure-, Hydroxyl- und Aminoequivalente, die gleich 200 Mol-% sind, mindestens eines difunktionellen Sulfomonomeren mit mindestens einer kationischen Sulfonatgruppe, die an einen aromatischen oder cycloaliphatischen Kern gebunden ist, und in dem die funktionellen Gruppen Hydroxy-, Carboxyl- oder Aminogruppen sind;
(c) mindestens eine difunktionelle Reaktionskomponente, ausgewählt aus einem Glykol oder einer Mischung eines Glykols und Diamins mit zwei -NRH Gruppen, wobei das Glykol zwei $-CH_2-OH$ Gruppen aufweist, wobei
(1) mindestens 15 Mol-%, bezogen auf die Gesamt-Mol-Prozente von Hydroxy- oder Hydroxy- und Amino-Equivalenten aus einem-Poly(ethylenglykol) der folgenden Strukturformel bestehen:

$H{(OCH_2-CH_2)}_nOH$

in der n für eine Zahl von 2 bis 20 steht, oder
(2) von der 0,1 bis weniger als 15 Mol-%, bezogen auf die Gesamt-Mol-Prozente von Hydroxy- oder Hydroxy- und Aminoequivalenten ein Poly(ethylenglykol) der folgenden Strukturformel ist:

$H{(OCH_2-CH_2)}_nOH$

in der n eine ganze Zahl zwischen 2 und 500 ist, wobei gilt, daß die Mol % des Poly(ethylenglykols) innerhalb dieses Bereiches umgekehrt proportional der Menge n innerhalb dieses Bereiches sind; und
(d) Null bis mindestens eine difunktionelle Reaktionskomponente, ausgewählt aus einer Hydroxycarbonsäure mit einer $-C(R)_2-OH$ Gruppe, einer Aminocarbonsäure mit einer -NRH Gruppe und einem Aminoalkohol mit einer $-C(R)_2-OH$ Gruppe und einer NRH Gruppe, oder Mischungen der difunktionellen Reaktionskomponenten;

wobei gilt, daß R in den (c) oder (d) Reaktionskomponenten jeweils für ein H-Atom oder eine

Alkylgruppe mit 1 bis 4 Kohlenstoffatomen steht;

(2) 1,0 bis 60 Gew.-% Pigmentmaterial;

(3) 0,01 bis 30 Gesamt-Gew.-% eines oder mehrerer Modifizierungsmittel, ausgewählt aus den folgenden:

(e) einer Verbindung oder einer Mischung von Verbindungen der allgemeinen Formel:

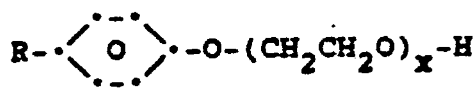

in der x 1-50 ist und R für eine geradkettige oder verzweigtkettige Alkylgruppe mit 1-20 Kohlenstoffatomen steht;

(f) einer Verbindung oder einer Mischung von Verbindungen der allgemeinen Formel:

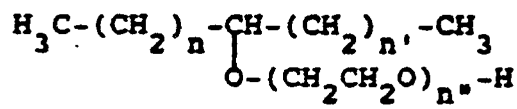

in der n gleich 11 bis 15 ist, n' gleich 0 bis 10 und n" gleich 1 bis 50;

(g) einer Verbindung oder einer Mischung von Verbindungen der allgemeinen Formel:

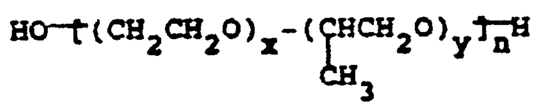

in der x gleich 1 bis 50, y gleich 1 bis 50 und n gleich 2 bis 25 ist;

(h) einer Verbindung oder einer Mischung von Verbindungen der Formel:

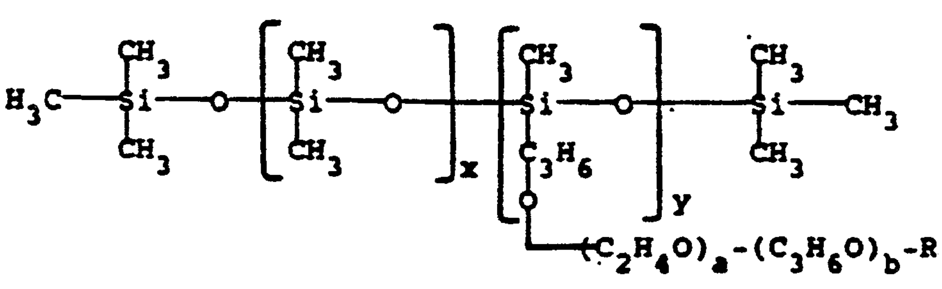

in der R für Wasserstoff oder Alkyl mit 1 - 8 Kohlenstoffatomen steht, x gleich 1 bis 50, y gleich 1 bis 50, a gleich 2 bis 30 und b gleich 2 bis 30 ist;

(i) einer Verbindung oder Mischung von Verbindungen der Formel:

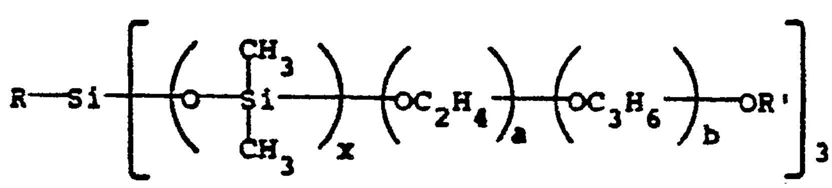

in der R und R' jeweils für Alkyl mit 1 bis 8 Kohlenstoffatomen stehen und x gleich 1 bis 50, a gleich 2 bis 35 und b gleich 2 bis 35 ist;

(j) einer Verbindung oder einer Mischung von Verbindungen der Formel: R-C≡C-$R^1$, in der R und $R^1$ jeweils ausgewählt sind aus geradkettigen oder verzweigtkettigen Alkylgruppen mit 1-15 Kohlenstoffatomen, wobei mindestens eine der Gruppen R und $R^1$ 1 bis 3 Hydroxylgruppen trägt, in denen das H jeder Hydroxylgruppe unabhängig voneinander unsubstituiert oder substituiert ist mit einem Substituenten der Formel:

$$-(CH_2-CH_2-O)_n-H \quad \text{oder} \quad -(CH_2-CH(CH_3)-O)_m-H$$

worin n und m jeweils für die Zahlen von 1 bis 50 stehen und die Gesamtmenge dieser Substituenten derart ist, daß die Gesamtzahl von n und m weniger als 60 beträgt;
(k) einer Verbindung oder einer Mischung von Verbindungen der Formel

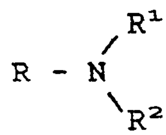

in der R für geradkettiges oder verzweigtkettiges Alkyl mit 1 bis 20 Kohlenstoffatomen steht, einer von $R^1$ und $R^2$ für H stehen kann und ferner beide $R^1$ und $R^2$ ausgewählt sein können aus den Substituenten:

$$-(CH_2-CH_2-O)_n-H \quad \text{oder} \quad -(CH_2-CH(CH_3)-O)_m-H$$

in denen m und n jeweils für Zahlen von 1 bis 50 stehen und die Gesamtmenge der vorhandenen Substituenten m und n weniger als etwa 60 beträgt;
(l) einer Verbindung oder einer Mischung von Verbindungen der Formel:

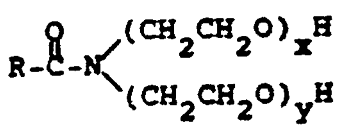

in der R für geradkettiges oder verzweigtkettiges Alkyl mit 6 bis 20 Kohlenstoffatomen steht und x und y jeweils Zahlen von 1 - 50 sind;
(m) einer Verbindung oder einer Mischung von Verbindungen der Formel:

$$F(CF_2CF_2)_{3-8}-CH_2CH_2O-(CH_2CH_2-O)_x-H$$

in der x eine Zahl von 1 - 50 ist;
(n) einer Verbindung oder einer Mischung von Verbindungen der Formel:

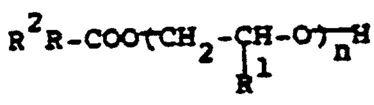

in der R für geradkettiges oder verzweigtkettiges Alkyl mit 6 - 20 Kohlenstoffatomen steht, $R^2$

gleich H oder Methyl ist, n gleich 1 - 50 ist und $R^2$ für H oder Hydroxyl steht; und (o) einer Verbindung oder eine Mischung von Verbindungen der Formel:

$HOCH_2(CH_2OCH_2)_nCH_2OH$

in der n für eine Zahl von 3 bis 100 steht; und

(4) Null bis 90 Gew.-% Wasser.

2. Zusammensetzung nach Anspruch 1, in der der n-Wert der Reaktionskomponente (c) der Formel:

$$H\!\left(OCH_2-CH_2\right)_{n}OH$$

zwischen 2 und 20 liegt.

3. Zusammensetzung nach Anspruch 2, in der das Polymere Material ein oder mehrere Polyestermaterialien aufweist, die eine Inherent-Viskosität von 0,28 bis 0,38 aufweisen, einen Säurerest von etwa 75 bis etwa 84 Mol-% Isophthalsäure und umgekehrt von 25 bis 16 Mol-% 5-Natriumsulfoisophthalsäure, und einen Glykolrest von 45 bis 60 Mol-% Diethylenglykol und umgekehrt von 55 bis 44 Mol-% 1,4-Cyclohexandimethanol oder Ethylenglykol oder Mischungen hiervon, und in der das Pigmentmaterial in einem Gewichtsverhältnis bezüglich der Gesamtheit der Polyestermaterialien von 1/10 bis 2/1 vermischt mit den Polyestermaterialien vorliegt.

4. Zusammensetzung nach Anspruch 3, in der der Säurerest 80 bis 83 Mol-% Isophthalsäure umfaßt und umgekehrt von 20 bis 17 Mol-% 5-Natriumsulfoisophthalsäure, und in der der Glykolrest 52 bis 56 Mol-% Diethylenglykol umfaßt und umgekehrt von 48 bis 44 Mol-% 1,4-Cyclohexandimethanol.

5. Zusammensetzung nach Anspruch 1, in der das Modifizierungsmittel in einer Gew.-Menge von 0,5 bis 10,0 %, bezogen auf das Gesamtgewicht der Zusammensetzung vorliegt und der folgenden Formel entspricht:

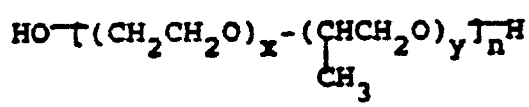

in der x für eine Zahl von 1 bis 50, y für eine Zahl von 1 bis 50 und n für eine Zahl von 2 bis 25 stehen.

6. Zusammensetzung nach einem der Ansprüche 1 - 5, in der das Pigment eines der folgenden Pigmente oder eine Mischung hiervon mit den folgenden Color-Index-Nummern ist:

C-I. Pigment Gelb 17; C.I. Pigment Blau 27; C.I. Pigment Rot 49:2; C.I. Pigment Rot 81:1; C.I. Pigment Rot 81:3; C.I. Pigment Rot 81:x; C.I. Pigment Gelb 83; C.I. Pigment Rot 57:1; C.I. Pigment Rot 49:1; C.I. Pigment Violett 23; C.I. Pigment Grün 7; C.I. Pigment Blau 61; C.I. Pigment Rot 48:1; C.I. Pigment Rot 52:1; C.I. Pigment Violett 1; C.I. Pigment Weiß 6; C.I. Pigment Blau 15; C.I. Pigment Gelb 12: C.I. Pigment Blau 56; C.I. Pigment Orange 5; C.I. Pigment Schwarz 7; C.I. Pigment Gelb 14; C.I. Pigment Rot 48:2 und C.I. Pigment Blau 15:3.

7. Zusammensetzung nach Anspruch 6, in der das polymere Material 4 bis 30 Gew.-% ausmacht, das Pigmentmaterial 1 bis 20 Gew.-%, das Wasser 55 bis 90 Gew.-% und das Modifizierungsmittel 0,05 bis 10,0 Gew.-%.

8. Zusammensetzung nach Anspruch 6, in der das polymere Material 10 bis 25 Gew.-% ausmacht, das Pigmentmaterial 8 bis 15 Gew.-%, das Wasser 65 bis 75 Gew.-% und das Modifizierungsmittel 0,1 bis

7 Gew.-%.

**9.** Zusammensetzung nach Anspruch 6, aufgetragen auf ein Substrat, ausgewählt aus einer Metallfolie, Zeitungspapier, gebleichtem oder ungebleichtem Kraft-Papier, mit Ton beschichtetem Papier, Glas, kalandriertem Papier, nichtfleckendem Papier, Karton und Filmen oder Folien oder anderen Substraten aus Polyester, Polycarbonat, Polyolefin, Celluloseester, regenerierter Cellulose, Poly(vinylidenchlorid), Polyamid oder Polystyrol.

**10.** Eine in Wasser unlösliche Beschichtung oder Druck auf einem Substrat nach Anspruch 9, aus der bzw. dem praktisch alles Wasser verdampft ist, und ein wesentlicher Anteil der ursprünglichen Metallkationen der wasserlöslich machenden Sulfonatgruppen des polymeren Materials durch ein unlöslich machendes Kation ersetzt worden ist.

**11.** Zusammensetzung nach Anspruch 6, in der das Gew.-Verhältnis von Wasser zu Gesamt-Modifizierungsmittel von 10 bis 180 beträgt.

**12.** Zusammensetzung nach Anspruch 1, in der das Modifizierungsmittel eine Verbindung oder eine Mischung von Verbindungen der folgenden Formel ist:

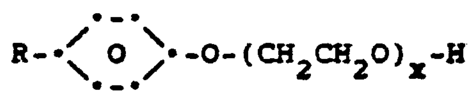

in der x für eine Zahl von 3 - 30 steht und R eine geradkettige oder verzweigtkettige Alkylgruppe mit 6 - 12 Kohlenstoffatomen ist.

**13.** Zusammensetzung nach Anspruch 12, in der x für eine Zahl von 3 - 30 steht und R 9 Kohlenstoffatome aufweist.

**14.** Zusammensetzung nach Anspruch 1, in der das Modifizierungsmittel eine Verbindung oder eine Mischung von Verbindungen der folgenden Formel ist:

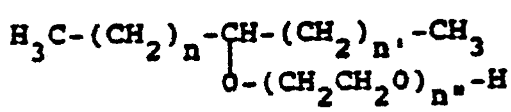

in der n eine Zahl von 11 bis 15 ist, n' für eine Zahl von 0 bis 10 steht und n" eine Zahl von 1 bis 50 ist.

**15.** Zusammensetzung nach Anspruch 1, in der das Modifizierungsmittel eine Verbindung oder eine Mischung von Verbindungen der folgenden Formel ist:

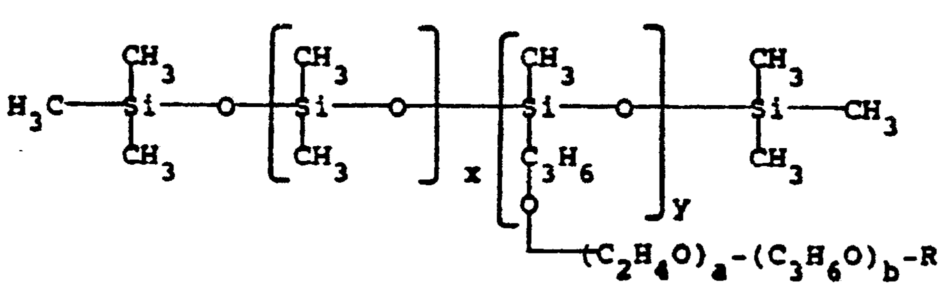

in der R für Wasserstoff oder Alkyl mit 1 - 8 Kohlenstoffatomen steht, x eine Zahl von 1 bis 50, y eine Zahl von 1 bis 50, a eine Zahl von 2 bis 30 und b eine Zahl von 2 bis 30 ist.

16. Zusammensetzung nach Anspruch 1, in der das Modifizierungsmittel eine Verbindung oder eine Mischung von Verbindungen der Formel ist:

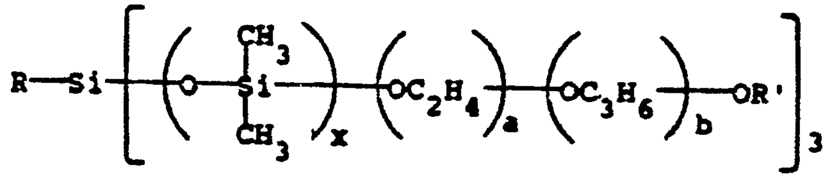

in der R und R' jeweils für Alkylgruppen mit 1 - 8 Kohlenstoffatomen stehen, x für eine Zahl von 1 bis 50, a für eine Zahl von 2 bis 35 und b für eine Zahl von 2 bis 35 stehen.

17. Zusammensetzung nach Anspruch 1, in der das Modifizierungsmittel eine Verbindung oder eine Mischung von Verbindungen der Formel R-C≡C-$R^1$ ist, in der R und $R^1$ jeweils ausgewählt sind aus geradkettigen und verzweigtkettigen Alkylgruppen mit 1 bis 15 Kohlenstoffatomen, wobei mindestens einer der Reste R oder $R^1$ 1 - 3 Hydroxylgruppen trägt, wobei das H einer jeden Hydroxylgruppe unabhängig voneinander unsubstituiert ist oder substituiert durch einen Substituenten der Formel:

$-(CH_2-CH_2-O)_n-H$ oder $-(CH_2-CH(CH_3)-O)_m-H$

worin n und m jeweils für Zahlen von 1 bis 50 stehen und die Gesamtzahl der vorhandenen Substituenten derart ist, daß die Gesamtzahl von n und m weniger als 60 beträgt.

18. Zusammensetzung nach Anspruch 17, in der n und m jeweils Zahlen von 3 bis 35 sind.

19. Zusammensetzung nach Anspruch 1, in der das Modifizierungsmittel eine Verbindung oder eine Mischung von Verbindungen der Formel

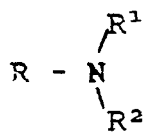

ist, in der R eine geradkettige oder verzweigtkettige Alkylgruppe mit 1 bis 20 Kohlenstoffatomen ist, eine der Gruppen $R^1$ und $R^2$ für H stehen kann und jede der Gruppen $R^1$ und $R^2$ ferner ausgewählt ist aus den Substituenten

$-(CH_2-CH_2-O)_n-H$ oder $-(CH_2-CH(CH_3)-O)_m-H$

wobei m und n jeweils Zahlen von 1 bis 50 sind und die Gesamtzahl der vorhandenen Substituenten derart bemessen ist, daß die Gesamtzahl von m und n weniger als 60 beträgt.

20. Zusammensetzung nach Anspruch 19, in der n und m jeweils Zahlen von 3 bis 35 sind.

21. Zusammensetzung nach Anspruch 1, in der das Modifizierungsmittel eine Verbindung oder eine Mischung von Verbindungen der Formel ist:

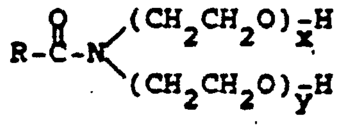

in der R für eine geradkettige oder verzweigtkettige Alkylgruppe mit 6 - 20 Kohlenstoffatomen steht und x und y jeweils Zahlen von 1 - 50 sind.

**22.** Zusammensetzung nach Anspruch 21, in der x und y jeweils für Zahlen von 3 bis 30 stehen.

**23.** Zusammensetzung nach Anspruch 1, in der das Modifizierungsmittel eine Verbindung oder eine Mischung von Verbindungen der Formel ist:

$$F(CF_2CF_2)_{3-8}CH_2CH_2O(CH_2CH_2-O)_xH$$

in der x für eine Zahl von 1 - 50 steht.

**24.** Zusammensetzung nach Anspruch 23, in der x für eine Zahl von 3 bis 30 steht.

**25.** Zusammensetzung nach Anspruch 1, in der das Modifizierungsmittel eine Verbindung oder eine Mischung von Verbindungen der Formel ist:

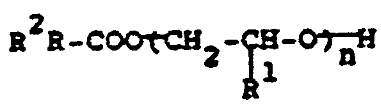

in der R für eine geradkettige oder verzweigtkettige Alkylgruppe mit 6 - 20 Kohlenstoffatomen steht, $R^1$ Wasserstoff oder Methyl bedeutet, n eine Zahl von 1 - 50 ist und $R^2$ für H oder Hydroxyl steht.

**26.** Zusammensetzung nach Anspruch 25, in der n für eine Zahl von 3 bis 30 steht.

**27.** Zusammensetzung nach Anspruch 1, in der das Modifizierungsmittel eine Verbindung oder eine Mischung von Verbindungen der Formel ist:

$$HOCH_2(CH_2OCH_2)_nCH_2OH$$

in der n eine Zahl von 3 bis 300 ist.

**28.** Zusammensetzung nach Anspruch 27, in der n eine Zahl von 5 bis 80 ist.

**29.** Verfahren zur Herstellung der Zusammensetzung nach Anspruch 1 mit den Stufen:
(a) Dispergieren des polymeren Materials in deionisiertem Wasser;
(b) Zugeben des Modifizierungsmittels zur Dispersion von (a) unter Bewegung zwecks Gewinnung einer praktisch homogenen Mischung;
(c) Zusetzen des Pigmentes zur Mischung von (b) unter Bewegung unter Bildung einer Vor-Dispersionsmischung und
(d) Vermahlen der Mischung von (c) zwecks Verminderung der Pigmentteilchengröße auf weniger als 6,0 auf der NPIRI-Skala.